# EUROPEAN PATENT APPLICATION

(11) **EP 4 734 226 A1**
(43) Date of publication of application: **29.04.2026**
(21) Application number: 24880939.4
(22) Date of filing: 07.04.2024
(51) Int. Cl.: H01M 10/613

(54) **BATTERY-CELL HEAT DISSIPATION STRUCTURE AND ENERGY STORAGE SYSTEM**

(30) Priority: 23.10.2023 CN 202322845260 U
(71) Applicant: Sungrow Power Supply Co., Ltd., Hefei, Anhui 230088 (CN)
(72) Inventor: WU, Maochao, Hefei, Anhui 230088 (CN); ZHOU, Meng, Hefei, Anhui 230088 (CN); SU, Jinguo, Hefei, Anhui 230088 (CN)
(74) Representative: Rooney, John-Paul
(86) International application number: PCT/CN2024/086322
(87) International publication number: WO 2025/086554

(57) **Abstract**

A battery-cell heat dissipation structure and an energy storage system, which relate to the technical field of energy storage systems. The battery-cell heat dissipation structure comprises a case and a battery cell, wherein a mounting cavity is formed in the case; a plurality of thermally conductive portions are arranged on a cavity wall surface of the mounting cavity; the battery cell is arranged in the mounting cavity; and a plurality of heat dissipation wall surfaces are provided on the battery cell, and same are in contact with the plurality of thermally conductive portions in a one-to-one correspondence manner. By means of the battery-cell heat dissipation structure, a better heat dissipation effect for the battery cell is achieved, and when a system operates, same has a lower temperature rise, and a smaller temperature difference; and the heat of the battery cell dissipates from the plurality of heat dissipation wall surfaces, and the surface utilization rate of the battery cell is also relatively high, thereby facilitating an improvement in the performance of the battery cell.

## Description

This application claims the priority to Chinese Patent Application No. CN202322845260.6, titled "BATTERY-CELL HEAT DISSIPATION STRUCTURE AND ENERGY STORAGE SYSTEM", filed with the China National Intellectual Property Administration on October 23, 2023, which is incorporated herein by reference in its entirety.

### FIELD

The present application relates to the technical field of energy storage systems, and in particular, to a battery-cell heat dissipation structure and an energy storage system.

### BACKGROUND

A cell, in an energy storage system, primarily functions to store and release electrical energy. Since the cell generates significant heat during charging and discharging, it is necessary to cool the cell to control temperature rise of the system, to ensure stable operation of the system.

Currently, in the energy storage system, the cell typically dissipates heat through only one side of the cell, such as, through a bottom of the cell, which results in poor heat dissipation performance and adversely affects the temperature rise and temperature difference performances of the system.

Therefore, an issue to be addressed by the present application is: how to improve the heat dissipation performance of the cell.

### SUMMARY

To address the above issue, a battery-cell heat dissipation structure is provided according to the present application. The battery-cell heat dissipation structure includes a housing and a cell. A mounting cavity is defined in the housing. Multiple heat conduction parts are provided on a cavity wall surface of the mounting cavity. The cell is arranged in the mounting cavity. The cell is provided with multiple heat dissipation wall surfaces which are in contact with the multiple heat conduction parts in one-to-one correspondence.

In an embodiment, the mounting cavity has a first cavity wall surface and a second cavity wall surface that are oppositely arranged along a first direction, the multiple heat conduction parts include a first heat conduction part arranged on the first cavity wall surface and a second heat conduction part arranged on the second cavity wall surface;
the cell has a top end face perpendicular to the first cavity wall surface, the multiple heat dissipation wall surfaces include a first heat dissipation wall surface and a second heat dissipation wall surface which are perpendicular to the top end face and oppositely arranged in the first direction, the first heat dissipation wall surface is in contact with the first heat conduction part, and the second heat dissipation wall surface is in contact with the second heat conduction part.

In an embodiment, a heat transfer member is provided between a wall portion of the mounting cavity and at least one of the first heat conduction part and the second heat conduction part. The heat transfer member is elastically deformable along the first direction. At least one of the first heat conduction part and the second heat conduction part is connected to the wall portion of the mounting cavity through the heat transfer member.

In an embodiment, at least one of the first heat conduction part and the second heat conduction part is integrally formed with or detachably connected to the heat transfer member; and/or, the heat transfer member is integrally formed with or detachably connected to the wall portion of the mounting cavity.

In an embodiment, a heating module is provided on a bottom end face of the cell; or, a heat dissipation module is provided on the bottom end face of the cell.

In an embodiment, the heating module includes a heating film or a heating plate; or, the heat dissipation module is made of a thermally conductive metal, and both ends of the heat dissipation module in a direction parallel to the bottom end face are connected to the wall portion of the mounting cavity.

In an embodiment, the heat conduction part is integrally formed with the wall portion of the mounting cavity; or, the heat conduction part is detachably connected to the wall portion of the mounting cavity.

In an embodiment, the housing is made of a heat dissipation material; and/or, the heat conduction part is made of a thermally conductive material.

In an embodiment, the housing includes a case and a cover covering the case, and the mounting cavity is defined between the case and the cover.

An energy storage system is further provided according to the present application, which includes a battery module, and the battery module includes the battery-cell heat dissipation structure as described above.

Compared with the related art, the battery-cell heat dissipation structure according to the present application has, but is not limited to, technical effects as follows.

In the battery-cell heat dissipation structure according to the present application, the multiple heat conduction parts are arranged on the wall surface of the mounting cavity of the housing to contact the heat dissipation wall surfaces of the cell, thereby transferring the heat of the cell to the housing. Moreover, the multiple heat dissipation wall surfaces are provided on the cell arranged in the mounting cavity and in contact with the multiple heat conduction parts in one-to-one correspondence, so that the heat of the cell is transferred to the multiple heat conduction parts through the multiple heat dissipation wall surfaces, and ultimately to the housing, enabling the cell to dissipate heat to the housing through multiple surfaces of the cell. Compared with the conventional approach of dissipating heat only through the bottom end face in contact with the housing, the present application enables simultaneous heat dissipation from the multiple heat dissipation wall surfaces to the housing through the multiple heat conduction parts, offering more heat dissipation paths, providing a better heat dissipation effect for the cell, resulting in a lower temperature rise and a small temperature difference during system operation. Furthermore, the cell dissipates heat from the multiple heat dissipation wall surfaces, resulting in higher surface utilization rate, thereby improving the performance of the cell.

### BRIEF DESCRIPTION OF THE DRAWINGS

FIG. 1 is a schematic structural diagram of a battery-cell heat dissipation structure according to an embodiment of the present application;
FIG. 2 is a schematic structural diagram of a battery-cell heat dissipation structure according to another embodiment of the present application; and
FIG. 3 is a schematic structural diagram of a battery-cell heat dissipation structure according to yet another embodiment of the present application.

Reference numerals in the figures are listed as follows:

| | | | |
|---|---|---|---|
| 1. | housing; | 11. | mounting cavity; |
| 111. | first cavity wall surface; | 111a. | first heat conduction part; |
| 112. | second cavity wall surface; | 112a. | second heat conduction part; |
| 12. | case; | 13. | cover; |
| 2. | cell; | 21. | top end face; |
| 211. | post; | 22. | first heat dissipation wall surface; |
| 23. | second heat dissipation wall surface; | 24. | bottom end face; |
| 3. | heat transfer member; | 4. | heating module; |
| 5. | heat dissipation module. | | |

### DETAILED DESCRIPTION OF THE EMBODIMENTS

In order to make the above objects, features, and advantages of the present application more apparent and understandable, specific embodiments of the present application are described in detail below with reference to the drawings.

In the description of the present application, it should be understood that terms "upper", "lower", "front", "rear", "left", and "right" indicate orientations or positional relationships based on orientations or positional relationships shown in the drawings, and are merely for the convenience of describing the present application and simplifying the description, rather than indicating or implying that an apparatus or element referred to must be in a particular orientation or be constructed and operated in a particular orientation, and therefore should not be construed as a limitation to the present application.

Furthermore, in the description of the present application, the X-axis in the drawings represents a horizontal direction and is designated as a left-right direction, with a positive direction of the X-axis representing a left side and a negative direction of the X-axis representing a right side accordingly; and the Z-axis in the drawings represents a vertical direction, i.e., an up-down direction, with a positive direction of the Z-axis representing an upper side and a negative direction of the Z-axis representing a lower side accordingly. It should be noted that the aforementioned representations of the X-axis and the Z-axis are merely for the convenience of describing the present application and simplifying the description, rather than indicating or implying that an apparatus or element referred to must be in a particular orientation or be constructed and operated in a particular orientation, and therefore should not be construed as a limitation to the present application.

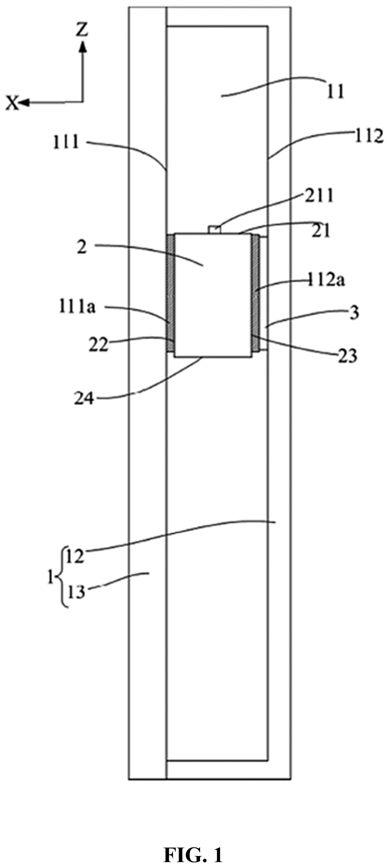

Reference is made to FIG. 1. A battery-cell heat dissipation structure is provided according to an embodiment of the present application. The battery-cell heat dissipation structure includes a housing 1 and a cell 2. A mounting cavity 11 is defined in the housing 1. Multiple heat conduction parts are disposed on a cavity wall surface of the mounting cavity 11. The cell 2 is arranged in the mounting cavity 11. The cell 2 is provided with multiple heat dissipation wall surfaces which are in contact with the multiple heat conduction parts in one-to-one correspondence.

It should be noted that the number of heat conduction parts and the number of heat dissipation wall surfaces are not limited, and may be two or more.

In this embodiment, the multiple heat conduction parts are arranged on the cavity wall surfaces of the mounting cavity 11 of the housing 1 to contact the heat dissipation wall surfaces of the cell 2, so that heat of the cell 2 is transferred to the housing 1. In addition, the multiple heat dissipation wall surfaces are provided on the cell 2 arranged in the mounting cavity 11 and are in contact with the multiple heat conduction parts in one-to-one correspondence, so that the heat of the cell 2 is transferred to the multiple heat conduction parts through the multiple heat dissipation wall surfaces, and ultimately transferred to the housing 1, thereby enabling the cell 2 to dissipate heat to the housing 1 through multiple sides of the cell 2.

In this way, compared with the conventional approach of dissipating heat only through a bottom end face 24 in contact with the housing 1, this embodiment enables simultaneous heat dissipation from the multiple heat dissipation wall surfaces (specifically, hereinafter referred to a first heat dissipation wall surface 22 and a second heat dissipation wall surface 23) to the housing 1 through the multiple heat conduction parts (specifically, hereinafter referred to a first heat conduction part 111a and a second heat conduction part 112a), offering more heat dissipation paths, providing superior cooling for the cell 2, resulting in a lower temperature rise and a small temperature difference during system operation. Furthermore, the cell 2 dissipates heat from the multiple heat dissipation wall surfaces, which results in high surface utilization rate, thereby improving the performance of the cell 2.

In an embodiment, referring to FIG. 1, the mounting cavity 11 has a first cavity wall surface 111 and a second cavity wall surface 112 oppositely arranged in a first direction. The multiple heat conduction parts include a first heat conduction part 111a disposed on the first cavity wall surface 111 and a second heat conduction part 112a disposed on the second cavity wall surface 112. The cell 2 has a top end face 21 that is perpendicular to the first cavity wall surface 111. The multiple heat dissipation wall surfaces include a first heat dissipation wall surface 22 and a second heat dissipation wall surface 23 which are perpendicular to the top end face 21 and oppositely arranged in the first direction. The first heat dissipation wall surface 22 is in contact with the first heat conduction part 111a, and the second heat dissipation wall surface 23 is in contact with the second heat conduction part 112a.

The first direction may refer to any direction with respect to the housing 1. Exemplarily, referring to FIG. 1, the first direction refers to an X-axis direction. It can be understood that the cell 2 typically has the top end face 21 that may be provided with a post 211. The post 211 may be connected to a positive or negative electrode material inside the cell 2. Specifically, referring to FIG. 1, the first cavity wall surface 111 may be a left cavity wall surface of the mounting cavity 11, the second cavity wall surface 112 may be a right cavity wall surface of the mounting cavity 11, the first heat dissipation wall surface 22 may be a left side wall surface of the cell 2, and the second heat dissipation wall surface 23 may be a right side wall surface of the cell 2.

In the embodiment, the multiple heat conduction parts are configured as the first heat conduction part 111a and the second heat conduction part 112a, and the multiple heat dissipation wall surfaces are configured as the first heat dissipation wall surface 22 and the second heat dissipation wall surface 23, so that the cell 2 can dissipate heat to the housing 1 not only through the first heat conduction part 111a via the first heat dissipation wall surface 22, but also through the second heat conduction part 112a via the second heat dissipation wall surface 23, achieving simultaneous dual-side cooling, and thereby improving the heat dissipation performance of the cell 2 and improving the surface utilization rate of the cell 2. Furthermore, the first heat dissipation wall surface 22 and the second heat dissipation wall surface 23 are side wall surfaces perpendicular to the top end face 21, the two heat dissipation wall surfaces avoid the top end face 21 where the post 211 is provided, thereby preventing interference between the heat conduction part and the post 211. Moreover, the side wall surface of the cell 2 that is perpendicular to the top end face 21 is a surface of the cell 2 with a relatively large surface area. Utilizing the side wall surface for heat dissipation means that a relatively large surface is available for heat exchange with the heat conduction part, resulting in high heat dissipation efficiency and further improving the heat dissipation effect.

In an embodiment, referring to FIG. 1, a heat transfer member 3 is provided between a wall portion of the mounting cavity 11 and at least one of the first heat conduction part 111a and the second heat conduction part 112a. The heat transfer member 3 is elastically deformable along the first direction. At least one of the first heat conduction part 111a and the second heat conduction part 112a is connected to the wall portion of the mounting cavity 11 through the heat transfer member 3.

In an embodiment, the heat transfer member 3 being provided between the wall portion of the mounting cavity 11 and at least one of the first heat conduction part 111a and the second heat conduction part 112a, may indicate that: a heat transfer member 3 is arranged between the first heat conduction part 111a and the wall portion of the mounting cavity 11, so that the first heat conduction part 111a is connected to the wall portion of the mounting cavity 11 through the heat transfer member 3; or, a heat transfer member 3 is arranged between the second heat conduction part 112a and the wall portion of the mounting cavity 11, so that the second heat conduction part 112a is connected to the wall portion of the mounting cavity 11 through the heat transfer member 3; or, a heat transfer member 3 is arranged between the first heat conduction part 111a and the wall portion of the mounting cavity 11 and a heat transfer member 3 is arranged between the second heat conduction part 112a and the wall portion of the mounting cavity 11, so that each of the first heat conduction part 111a and the second heat conduction part 112a is connected to the wall portion of the mounting cavity 11 through the respective heat transfer member 3.

The heat transfer member 3 may be configured as a spring or an elastic sheet. The heat transfer member 3 may be made of a material with certain heat dissipation capability, such as a thermally conductive metal like copper, aluminum, steel, etc., or a thermally conductive plastic.

In the embodiment, the heat transfer member 3 is configured to be elastically deformable along the first direction, so that the heat transfer member 3 can not only realize heat transfer between the first heat conduction part 111a and the housing 1 or between the second heat conduction part 112a and the housing 1, but also the elastic force of the heat transfer member 3 can provide a certain pressure for the cell 2 in the first direction to ensure secure and reliable installation of the cell 2 within the housing 1. Moreover, when the cell 2 expands during charging, the elastic deformation of the heat transfer member 3 can provide a certain expansion redundancy space for the cell 2, preventing damage to the cell 2 due to the failure to expand timely.

In an embodiment, at least one of the first heat conduction part 111a and the second heat conduction part 112a is integrally formed with or detachably connected to the heat transfer member 3; and/or, the heat transfer member 3 is integrally formed with or detachably connected to the wall portion of the mounting cavity 11.

In an embodiment, at least one of the first heat conduction part 111a and the second heat conduction part 112a being integrally formed with or detachably connected to the heat transfer member 3 may indicate that: the first heat conduction part 111a is integrally formed with or detachably connected to the heat transfer member 3; or the second heat conduction part 112a is integrally formed with or detachably connected to the heat transfer member 3; or both the first heat conduction part 111a and the second heat conduction part 112a are integrally formed with or detachably connected to their corresponding heat transfer members 3. It should be noted that, the specific manner of the integral formation is not limited, for example, being integrally formed during processing; the specific manner of detachable connection is not limited, for example, being bonded together.

In the embodiment, at least one of the first heat conduction part 111a and the second heat conduction part 112a is integrally formed with the heat transfer member 3, which facilitates the integrated processing and manufacturing of the heat conduction part and the heat transfer member 3, thereby improving manufacturing efficiency and saving time required for assembling the battery-cell heat dissipation structure. At least one of the first heat conduction part 111a and the second heat conduction part 112a is detachably connected to the heat transfer member 3, which facilitates the disassembly and replacement of the heat conduction part. The heat transfer member 3 is integrally formed with the wall portion of the mounting cavity 11, which facilitates the integrated processing and manufacturing of the heat transfer member 3 and the housing 1, thereby improving the manufacturing efficiency and saving the time required for assembling the battery-cell heat dissipation structure. The heat transfer member 3 is detachably connected to the wall portion of the mounting cavity 11, which facilitates the disassembly and replacement of the heat transfer member 3.

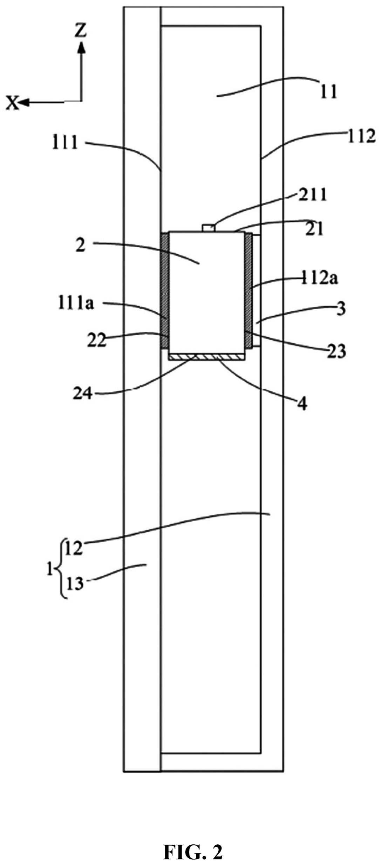

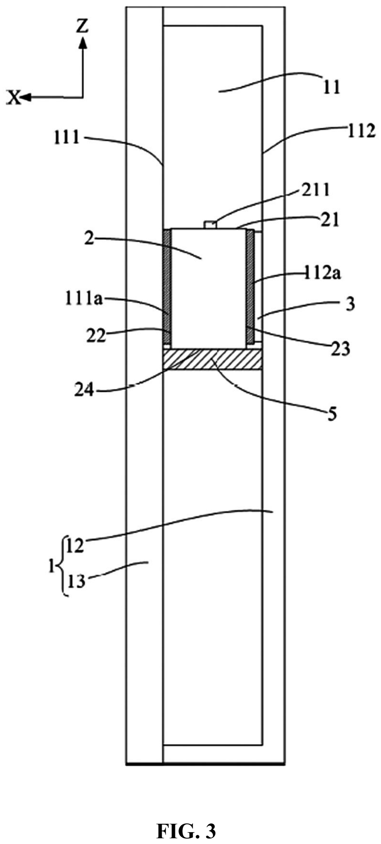

In an embodiment, referring to FIG. 2, a heating module 4 is provided on a bottom end face 24 of the cell 2; or, referring to FIG. 3, a heat dissipation module 5 is provided on the bottom end face 24 of the cell 2.

In the embodiment, by arranging the heating module 4 on the bottom end face 24 of the cell 2, the heating module 4 can provide a constant heating effect for the cell 2 during the operation of the cell 2, ensuring that the cell 2 operates within an appropriate operating temperature range, so that the cell 2 operates stably. By arranging the heat dissipation module 5 on the bottom end face 24 of the cell 2, a large amount of heat generated by the cell 2 can be dissipated from the bottom end face 24 of the cell 2, further improving the heat dissipation performance and improving the temperature rise and the temperature difference performances of the system.

In an embodiment, referring to FIG. 2, the heating module 4 includes a heating film or a heating plate; or, referring to FIG. 3, the heat dissipation module 5 is made of a thermally conductive metal, and two ends of the heat dissipation module 5 in a direction parallel to the bottom end face 24 are connected to the wall portion of the mounting cavity 11.

In the embodiment, in the case that the heating module 4 is arranged on the bottom end face 24 of the cell 2, the heating module 4 may be selected as the heating film or the heating plate. The heating film and the heating plate are relatively thin, which does not increase the volume of the cell 2 excessively, so that the space of the mounting cavity 11 is not too crowded, which facilitates heat dissipation of the cell 2. In the case that the heat dissipation module 5 is arranged on the bottom end face 24 of the cell 2, the heat dissipation module 5 may be made of the thermally conductive metal, such as copper, aluminum, or steel, and the two ends of the heat dissipation module 5 in the direction parallel to the bottom end face 24 are connected to the wall portion of the mounting cavity 11. In this way, the heat dissipation module 5 can transfer heat from the bottom end face 24 of the cell 2 to the housing 1 through its two ends, thereby achieving heat dissipation through the bottom end face 24 of the cell 2, thus making the structure simple and the installation convenient.

In an embodiment, the heat conduction part is integrally formed with the wall portion of the mounting cavity 11; or, the heat conduction part is detachably connected to the wall portion of the mounting cavity 11.

It should be noted that, the specific manner in which the heat conduction part is integrally formed with the wall portion of the mounting cavity 11 is not limited, for example, the heat conduction part may be integrally formed with the wall portion of the mounting cavity 11 during processing; the specific manner in which the heat conduction part is detachably connected to the wall portion of the mounting cavity 11 is not limited, for example, the heat conduction part may be bonded to the wall portion of the mounting cavity 11.

In the embodiment, in a case that no heat transfer member 3 is provided between the heat conduction part and the wall portion of the mounting cavity 11, the heat conduction part may be integrally formed with the wall portion of the mounting cavity 11, so that the heat conduction part and the wall portion of the mounting cavity 11 are securely connected, and the battery-cell heat dissipation structure is durable. Alternatively, the heat conduction part may be detachably connected to the wall portion of the mounting cavity 11 to facilitate disassembly and replacement of the heat conduction part.

In an embodiment, the housing 1 is made of a heat dissipation material; and/or, the heat conduction part is made of a thermally conductive material. Specifically, the housing 1 is made of a heat dissipation material, which may be a material with certain heat dissipation capability, such as a thermally conductive metal like copper, aluminum, steel, etc., or a thermally conductive plastic. The thermally conductive material may be thermal adhesive or a thermally conductive metal. For example, the thermal adhesive may be thermally conductive structural adhesive or thermally conductive silicone, and the thermally conductive metal may be copper, aluminum, steel, etc.

In the embodiment, the housing 1 is made of the heat dissipation material, which facilitates heat dissipation of the cell 2, thereby improving the heat dissipation effect. The heat conduction part is made of the thermally conductive material, which is convenient for the heat conduction part to transfer the heat from the cell 2 to the housing 1, thereby facilitating heat dissipation of the cell 2 and improving the heat dissipation effect.

In an embodiment, referring to FIGS. 1 to 3, the housing 1 includes a case 12 and a cover 13 covering the case 12. The mounting cavity 11 is defined between the case 12 and the cover 13.

In the embodiment, the housing 1 is configured as the case 12 and the cover 13 that are separately arranged, facilitating manufacturing and saving processing costs. In addition, the case 12 and cover 13 that are separate parts also facilitate the installation of the cell 2, so that the cell 2 is easy to disassemble and assemble.

An energy storage system is further provided according to an embodiment of the present application. The energy storage system includes a battery module including the battery-cell heat dissipation structure described above. Since the energy storage system adopts all the technical solutions of all the above embodiments of the battery-cell heat dissipation structure, the energy storage system has at least all the beneficial effects brought by the technical solutions of the above embodiments, which are not described in detail herein.

In the description of the present application, it should be noted that, unless otherwise explicitly specified and defined, the terms "provided with", "provided on", "covering" should be understood broadly. For example, they may refer to a fixed connection, a detachable connection or an integral connection, or may refer to a direct connection or an indirect connection via an intermediate medium. Those skilled in the art can understand the specific meanings of the above terms in the present application based on the specific situations.

In the description of the present application, the term "and/or" includes three parallel solutions. Taking "A and/or B" as an example, it encompasses solution A, solution B, or a solution that both A and B are satisfied.

In the description of the present application, terms such as "first" and "second" are only for description purposes, and should not be construed as indicating or implying relative importance or implicitly indicating the number of technical features indicated. Thus, a feature defined by "first" or "second" may explicitly or implicitly include at least one such feature.

Furthermore, in the description of the present application, the terms "the embodiment" and "exemplarily" mean that a specific feature, structure, material, or characteristic described in connection with the embodiment or implementation is included in at least one embodiment or implementation of the present application. In the present application, schematic expressions of the above terms do not necessarily refer to the same embodiment or implementation. Moreover, the specific feature, structure, material, or characteristic described may be combined in any suitable manner in any one or more embodiments or implementations.

Although the present application is described as above, the protection scope of the present application is not limited thereto. Those skilled in the art can make various changes and modifications without departing from the spirit and scope of the present application, and all such changes and modifications shall fall within the protection scope of the present application.

## Claims

1. A battery-cell heat dissipation structure, **characterized by** comprising:
a housing (1); and
a cell (2),
wherein a mounting cavity (11) is defined in the housing (1), the mounting cavity (11) has a cavity wall surface which is provided with a plurality of heat conduction parts, the cell (2) is arranged in the mounting cavity (11), and the cell (2) is provided with a plurality of heat dissipation wall surfaces which are in contact with the plurality of heat conduction parts in one-to-one correspondence.

2. The battery-cell heat dissipation structure according to claim 1, wherein
the mounting cavity (11) has a first cavity wall surface (111) and a second cavity wall surface (112) that are oppositely arranged along a first direction, the plurality of heat conduction parts comprise a first heat conduction part (111a) arranged on the first cavity wall surface (111) and a second heat conduction part (112a) arranged on the second cavity wall surface (112); and
the cell (2) has a top end face (21) perpendicular to the first cavity wall surface (111), the plurality of heat dissipation wall surfaces comprise a first heat dissipation wall surface (22) and a second heat dissipation wall surface (23) which are perpendicular to the top end face (21) and are oppositely arranged in the first direction, the first heat dissipation wall surface (22) is in contact with the first heat conduction part (111a), and the second heat dissipation wall surface (23) is in contact with the second heat conduction part (112a).

3. The battery-cell heat dissipation structure according to claim 2, wherein a heat transfer member (3) is provided between a wall portion of the mounting cavity (11) and at least one of the first heat conduction part (111a) and the second heat conduction part (112a), the heat transfer member (3) is elastically deformable along the first direction, and at least one of the first heat conduction part (111a) and the second heat conduction part (112a) is connected to the wall portion of the mounting cavity (11) through the heat transfer member (3).

4. The battery-cell heat dissipation structure according to claim 3, wherein
at least one of the first heat conduction part (111a) and the second heat conduction part (112a) is integrally formed with or detachably connected to the heat transfer member (3); and/or
the heat transfer member (3) is integrally formed with or detachably connected to the wall portion of the mounting cavity (11).

5. The battery-cell heat dissipation structure according to claim 1, wherein
a bottom end face (24) of the cell (2) is provided with a heating module (4); or
the bottom end face (24) of the cell (2) is provided with a heat dissipation module (5).

6. The battery-cell heat dissipation structure according to claim 5, wherein
the heating module (4) comprises a heating film or a heating plate; or
the heat dissipation module (5) is made of a thermally conductive metal, and both ends of the heat dissipation module (5) in a direction parallel to the bottom end face (24) are connected to the wall portion of the mounting cavity (11).

7. The battery-cell heat dissipation structure according to claim 1, wherein
the heat conduction part is integrally formed with a wall portion of the mounting cavity (11); or
the heat conduction part is detachably connected to the wall portion of the mounting cavity (11).

8. The battery-cell heat dissipation structure according to claim 1, wherein
the housing (1) is made of a heat dissipation material; and/or
the heat conduction part is made of a thermally conductive material.

9. The battery-cell heat dissipation structure according to claim 1, wherein the housing (1) comprises a case (12) and a cover (13) covering the case (12), and the mounting cavity (11) is defined between the case (12) and the cover (13).

10. An energy storage system, comprising a battery module comprising the battery-cell heat dissipation structure according to any one of claims 1 to 9.
